# EUROPÄISCHE PATENTANMELDUNG

(11) **EP 0 911 643 A2**
(43) Veröffentlichungstag der Anmeldung: **28.04.1999**
(21) Anmeldenummer: 98117850.2
(22) Anmeldetag: 21.09.1998
(51) Int. Cl.: G01S 5/14

(54) **Digitales Kommunikationssystem sowie mobiles und stationäres Endgerät dafür**

(30) Priorität: 23.10.1997 DE 19746745
(71) Anmelder: Deutsche Telekom AG, 53113 Bonn (DE)
(72) Erfinder: Köhler, Karl-Ludwig, 91448 Emskirchen (DE); Köhler, Martin, Dipl.-Ing.(FH), 90547 Stein (DE)

(57) **Zusammenfassung**

Die Erfindung betrifft ein Kommunikationssystem auf der Basis eines Systems vorwiegend für digitale Mobilkommunikation, z.B. GSM (Global System for Mobile Communication), sowie Endgeräte dazu, wobei in mobile Endgeräte (1, 7, 12) jeweils ein Satellitenempfänger (13), vorzugsweise ein GPS-Modul, zur aktuellen Positionsbestimmung integriert ist. Vorzugsweise wird die Ortsauflösung mittels differentieller Verfahren, insbesondere, DGPS erhöht, wobei die entsprechenden Korrektursignale durch eine Referenzstation erzeugt und über das GSM-Netz oder über Langwelle übertragen und vom Endgerät ausgewertet werden. Vom mobilen Endgerät sind unter Übermittlung der Positionsdaten ortsspezifische Informationen von wenigsten einem Informationsserver (3) anforderbar und am Endgerät ausgebbar. Der Informationsserver (3) stellt aufgrund der Positionsdaten automatisch eine Auswahl von ortsspezifisch relevanten Informationen zur Abfrage durch das Endgerät bereit, wodurch ein flexibles, ortsspezifischen Anforderungen und Aufgabenstellungen anpassungsfähiges Kommunikationssystem realisiert wird.
Ferner betrifft die Erfindung stationäre und mobile Endgeräte, bei denen eine geographische Positionsangabe fest hinterlegt ist bzw. die einen Satellitenempfänger zur Positionsbestimmung aufweisen.

## Beschreibung

Die Erfindung betrifft ein digitales Kommunikationssystem gemäß dem Oberbegriff von Anspruch 1 sowie ein mobiles Endgerät für digitalen Mobilfunk gemäß dem Oberbegriff von Anspruch 17 und ein stationäres Endgerät nach dem Oberbegriff von Anspruch 22.

Systeme für digitale Mobilkommunikation, z.B. GSM (Global System for Mobilecommunication), werden gegenwärtig zunehmend eingesetzt und ermöglichen dem Nutzer, zu jeder Zeit und nahezu an jedem Ort zu kommunizieren. Zur Übertragung von Sprache und/oder Daten wird von einem mobilen Endgerät wie z. B. einem Mobiltelefon, eine Funkverbindung zur nächstgelegenen Mobilfunkbasisstation hergestellt und je nach angewählter Rufnummer über das terrestrische Kommunikationsnetz (TK) an ein stationäres Endgerät oder ggf. per Funk über ein oder mehrere weitere Basisstationen an ein mobiles Endgerät des Kommunikationspartners weitervermittelt.

Weiterhin sind Satellitennavigationssysteme bekannt, welche derzeit, abgesehen von der militärischen Anwendung, im zivilen Sektor hauptsächlich zur Positionsbestimmung im See- und Luftverkehr eingesetzt werden. Satellitengestützte Navigationssysteme finden sich auch bereits im Landverkehr und dienen dort meist zur externen Überwachung der Position einzelner Fahrzeuge. Weiterhin sind Landfahrzeuge mit eingebauten Satellitennavigationssystemen bekannt, wobei das Satellitennavigationssystem in Verbindung mit digitalen Stadtplänen und Landkarten eine optische und/oder akustische Führung zu einem vorgegebenen Ziel ermöglicht.

Neben dem russischen GLONASS oder dem europäischen System EUTELSAT oder dem geplanten ENSS ist GPS (Global Positioning System) das derzeit am weitesten verbreitete System zur Sateltitennavigation. Das Prinzip von GPS beruht auf der Laufzeitvermessung von präzise zeitgesteuerten Signalen, die von Satelliten gesendet werden. Die Signale von vier der derzeit insgesamt 24 entsprechenden Navigationssatelliten werden mit Hilfe eines GPS-Moduls zur Bestimmung der momentanen Position ausgewertet. Das GPS-Modul stellt die Positionsdaten unter Angabe der WGS 84-Koordinaten (World Geodetic System 1984), d. h. Länge, Breite und Höhe, zur Verfügung. Die mit GPS-Geräten für zivile Nutzung erreichbare Genauigkeit in der Positionsbestimmung beträgt etwa 40 bis 100 Meter.

Die Ungenauigkeiten der über GPS bestimmten Positionsdaten sind durch den nicht genau bekannten Verlauf der Satellitenumlaufbahn bedingt. Eine Erhöhung der Ortsauflösung wird beim Differential GPS (DGPS) erzielt. Dabei befindet sich an einem Ort mit genau bekannter Position eine Referenzstation mit einem GPS-Modul, die aus der Abweichung ihrer per GPS errechneten von der tatsächlichen Position Korrekturfaktoren ermittelt, welche in dem entsprechenden Gebiet ausgesendet werden. In dieser Region betriebene GPS-Module können auf diese DGPS-Korrekturdaten zugreifen, wodurch die Genauigkeit in der Positionsbestimmung um etwa den Faktor 10 gesteigert werden kann.

Der Erfindung liegt die Aufgabe zugrunde, ein Kommunikationssystem auf der Basis bekannter Telekommunikationssysteme zur Verfügung zu stellen, welches neben der Erfüllung von Telekommunikationsaufgaben an weitere differenzierte, ortsspezifische Aufgabenstellungen anpassungsfähig ist.

Die Lösung der Aufgabe besteht erfindungsgemäß in einem digitalen Kommunikationssystem gemäß dem Oberbegriff von Anspruch 1, bei welchem in mobile Endgeräte jeweils ein Satellitenempfänger integriert ist, welcher die momentane geographische Position des Endgeräts durch Auswertung von Satellitensignalen zu ermitteln imstande ist, und in stationären Endgeräten eine geographische Positionsangabe hinterlegt ist. Vom Endgerät sind unter Übermittlung der Positionsdaten ortsspezifische Informationen von wenigsten einem Informationsserver anforderbar und am Endgerät ausgebbar, wobei der Informationsserver automatisch eine Auswahl von ortsspezifisch relevanten Informationen zur Abfrage bereitzustellen imstande ist. Weiterhin sind die geographischen Positionen unter Umgehung des Servers direkt zwischen zwei TK-Endgeräten austauschbar.

Durch die Verknüpfung der Komponenten Telekommunikation und Satellitennavigation steht dem Benutzer eine neue umfangreichere und flexiblere Informationseinheit zur Verfügung. Zur Einführung des erfindungsgemäßen Kommunikationssystems auf der Basis bekannter Systeme ist jedoch eine technische Modifikation der bisher verwendeten Endgeräte notwendig.

Zur Lösung der Aufgabe trägt daher auch ein mobiles Endgerät für ein System für digitalen Mobilfunk bei, z.B. GSM (Global System for Mobile Communication), welches wenigstens eine Ein- und Ausgabeeinheit, eine Mobilfunksende- und Empfangseinheit, einen Satellitenempfänger und ein Navigationsmodul aufweist, wobei der Satelittenempfänger von Satelliten ausgesandte Signale zu empfangen und daraus in Verbindung mit dem Navigationsmodul die momentane räumliche Position des Endgeräts zu ermitteln imstande ist, wobei das Endgerät unter Übermittlung der Positionsdaten ortsspezifische Informationen von wenigsten einem Informationsserver anzufordern und dem Benutzer auszugeben imstande ist, sowie Positionsdaten mit anderen mobilen oder stationären Endgeräten auszutauschen in der Lage ist.

Mit einem derartigen Endgerät kann der Benutzer in gewohnter Weise über das erfindungsgemäße Kommunikationssystem telefonieren. Weiterhin ist das mobile Endgerät durch den integrierten Satellitenempfänger, welcher vorzugsweise ein GPS-Modul ist, in der Lage, seine geographische Position innerhalb gewisser systembedingter Grenzen genau zu bestimmen. Gegebenenfalls zusammen mit weiteren benutzerspezifischen Angaben können diese Positionsdaten über den zur herkömmlichen Telekommunikation verwendeten GSM-Funkkanal zur Mobilfunk-Basisstation übertragen werden, welche die Daten an einen Informationsserver oder an ein weiteres Endgerät weiterleitet.

In dem Informationsrechner sind Daten verschiedenster Art gespeichert., z. B. Stadtpläne und Landkarten in digitaler Form, Adressen und Telefonnummern von Hotels, Banken, Geschäften, Ärzten und Krankenhäusern, Veranstaltungskalender mit Angabe des Veranstaltungsortes, Lage und kurze Beschreibung von Sehenswürdigkeiten u.v.m.

Der Informationsserver ist in der Lage, entsprechend der ihm übermittelten Positionsdaten eine Auswahl von ortsspezifisch relevanten Informationen zu treffen, um diese dem Benutzer des Endgeräts zur Abfrage zur Verfügung zu stellen. Dabei kann der Benutzer vorzugsweise auswählen, ob er sich für lokale, regionale oder globale Informationen interessiert. Lokale Informationen betreffen beispielsweise einen Umkreis von wenigen hundert Metern ab der zuletzt festgestellten und gemeldeten Position des Benutzers bzw. des Endgeräts. Regionale Daten sind beispielsweise Informationen über die betreffende Stadt und/oder Region. Es sind auch beliebige Zwischenstufen denkbar, z. B. Abruf von Informationen über einen Stadtteil, einen Landkreis etc.

Das Informationsangebot wird dem Benutzer über das Mobilfunknetz übermittelt, wobei der Informationsserver eine akustische oder optische Benutzerführung mittels synthetischer Sprache oder über das Display des Endgeräts veranlaßt. Durch entsprechende Sprach- oder Tastatureingaben kann der Benutzer die gewünschte ortsspezifische Information anfordern. Vorzugsweise werden die Positionsdaten des Endgeräts während der Verbindung mit dem Informationsserver aktualisiert.

Das erfindungsgemäße Kommunikationssystem weist wenigstens einen Informationsserver auf. Es können jedoch auch mehrere regionale Server vorliegen. Weiterhin möglich ist, daß der Informationsserver eine Verbindung zum Internet herstellen kann und aus diesem über geeignete Suchmechanismen die entsprechenden Informationen ermittelt.

Vorzugsweise ist die momentane räumliche Position eines Endgeräts über das Mobilfunksystem einem weiteren Endgerät übermittelbar. Dies sollte aber aus Sicherheitsüberlegungen nicht automatisch, sondern nur mit Zustimmung des Positionsinhabers erfolgen. Auf diese Weise kann auf mündliche Ortsbeschreibungen, z. B. bei der Abgabe eines Notrufs oder bei der Anforderung eines Taxis, verzichtet werden. Für den Empfänger muß allerdings die Möglichkeit bestehen, diese geographischen Positionsdaten, einer Straße, Hausnummer oder dem Ort auf einer Landkarte oder Stadtplan zuordnen zu können. Zu diesem Zweck sind auch stationäre Endgeräte erfindungsgemäß mit entsprechenden Empfangsmodalitäten auszustatten.

Vorzugsweise ist das verwendete Satellitennavigationssystem das bekannte GPS-System, d.h. Satellitenempfänger und Navigationsmodul sind die entsprechende GPS-Einheiten.

In vorteilhafter Weise kann die Ortsauflösung innerhalb des erfindungsgemäßen Kommunikationssystems mittels differentieller Verfahren, insbesondere DGPS, erhöht werden. Dazu ist wenigstens eine Referenzstation vorgesehen, welche Korrekturdaten, insbesondere DGPS-Daten, zu ermitteln und an ein mobiles Endgerät bzw. dessen Navigationsmodul zu übertragen imstande ist. Das Endgerät ist so gestaltet, daß es die DGPS-Korrekturdaten zu empfangen und auszuwerten imstande ist. Die Referenzstation weist ein GPS-Modul zum Empfang der Satellitensignale auf, sowie einen Prozessor, mit welchem die Korrekturdaten in Abhängigkeit von der Abweichung der gemessenen von der tatsächlichen Position berechnet werden.

Zur Implementierung von Korrekturdaten in das erfindungsgemäße Kommunikationssystem werden zwei Möglichkeiten vorgeschlagen. Entsprechend der ersten Möglichkeit dient wenigstens eine, vorzugsweise jedoch alle Mobilfunkbasisstationen als Referenzstation und wird mit einem GPS-Modul und einem Rechner ausgerüstet. Die so gewonnenen Korrekturdaten werden über den Mobilfunkkanal an das mobile Endgerät gesendet. Da das mobile Endgerät ebenfalls eine Navigationseinheit implementiert hat, kann diese aus den Korrekturdaten ihre eigene Position genauer berechnen.

Vorteilhaft bei Verwendung aller Mobilfunkbasisstationen als Referenzstationen ist, daß die Korrekturdaten stets lokal zur Verfügung stehen und daher die Korrektur sehr genau möglich ist. Nachteilig ist jedoch, daß eine Vielzahl von Referenzstationen bezüglich ihrer geographischen Position exakt vermessen und mit Satellitenmodulen und Prozessoren aufgerüstet werden müssen.

Als Alternative wird daher vorgeschlagen, daß die Referenzstation die Korrekturdaten im Wellenlängenbereich großer Reichweite, z.B. Langwelle sendet. Dies hat den Vorteil, daß ein Gebiet mit einem Radius von bis zum 600 km um die Referenzstation mit Korrekturdaten versorgt werden kann, ohne daß die Abweichung der auf diese Weise zentral ermittelten Korrekturdaten von lokal ermittelten Korrekturdaten zu Unterschieden in der Positionsbestimmung von mehr als etwa 3 m führt. Je nach Größe des abzudeckenden Gebietes sind daher für die Ausrüstung des erfindungsgemäßen Kommunikationssystems nur wenige Referenzstationen notwendig.

Werden die Korrekturdaten z.B. auf Langwelle gesendet, so muß das Endgerät mit einem entsprechenden Funkempfänger ausgerüstet sein, um die Korrekturdaten empfangen und auswerten zu können.

Die einzelnen Komponenten des erfindungsgemäßen Endgeräts, insbesondere Satellitenempfänger bzw. das Satellitenmodul, das Navigationsmodul, die Mobilfunksende- und Empfangseinheit, und ggf. der Langwellenempfänger sind vorzugsweise durch einen gemeinsamen Datenbus miteinander verbunden. In das Endgerät ist weiterhin ein Prozessor integriert, welcher zur Auswertung aller Daten dient und die Daten aufbereitet an eine Benutzeroberfläche ausgibt.

Kurzbeschreibung der Zeichnung, in der zeigen:
- Figur 1: die Organisation des erfindungsgemäßen Kommunikationssystems zwischen Anbieter, Nutzer und Telekommunikationsnetz (TK)
- Figur 2: schematisch die Komponenten eines Kommunikationssystems mit einem Funksender großer Reichweite als Referenzstation
- Figur 3: ein Blockdiagramm eines erfindungsgemäßen Endgeräts

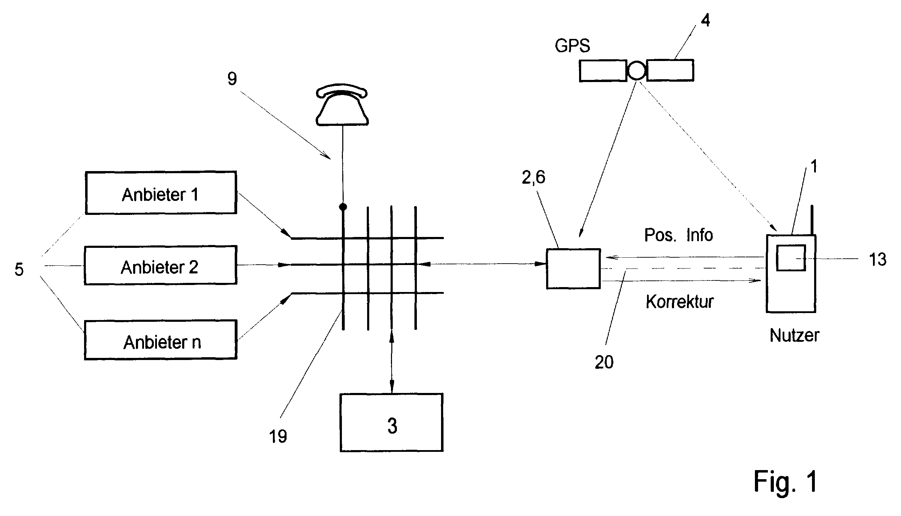

Figur 1 zeigt die Organisationsstruktur eines erfindungsgemäßen Kommunikationssystems, in welches die Komponenten Telekommunikation und Satellitennavigation integriert sind. Zwischen dem mobilen Endgerät 1 und einer Basisstation 2 kann in bekannter Weise eine Mobilfunkverbindung 20 aufgebaut werden, so daß der Nutzer mit dem Endgerät 1 in bekannter Weise telefonieren kann.

Über die Basisstation 2 kann eine Verbindung über das Mobilfunknetz zu weiteren mobilen Endgeräten in bekannter Weise aufgebaut werden. Ebenso kann über die Basisstation 2 in bekannter Weise auf das terrestrische Kommunikationsnetz 19 zugegriffen und eine Verbindung zu einem beliebigen Festnetzteilnehmer aufgebaut werden, z.B. zum stationären Endgerät 9 oder zum Informationsserver 3. Über die Kommunikationsverbindung zu einem weiteren mobilen oder stationären Endgerät können sowohl Sprach- als auch Positionsdaten ausgetauscht werden, wobei die Positionsdaten des stationären Endgeräts dort elektronisch hinterlegt sind. Zwischen dem Informationsserver 3 und dem mobilen Endgerät 1 werden Positions- und ggf. ortsspezifische Informationsdaten ausgetauscht.

Das Endgerät 1 ist weiterhin mit einem Satellitenempfangsmodul 13 z.B. GPS, ausgestattet, welches GPS-Signale von wenigstens drei Navigationssatelliten 4, von denen hier nur einer dargestellt ist, empfängt und auswertet. Die Auswertung der Satellitensignale zur Bestimmung der geographischen Situation des Endgeräts 1 erfolgt entweder kontinuierlich oder auf manuelle Anforderung seitens des Nutzers.

Zur Erhöhung der Genauigkeit der Positionsbestimmung wird in dem hier dargestellten Kommunikationssystem das differentielle GPS-Verfahren verwendet, wobei die Basissation 2 als Referenzstation 6 dient. Mittels eines in die Mobilfunkbasissation integrierten GPS-Moduls werden Satellitensignale empfangen und zur Berechnung der scheinbaren geographischen Lage der Basisstation bzw. Referenzstation 6 verwendet. Aufgrund der Abweichungen der so ermittelten Positionsdaten von den auf andere Weise bestimmten tatsächlichen Lagekoordinaten der Referenzstation berechnet ein in die Referenzstation 6 integrierter Prozessor die Korrekturdaten bzw. Korrekturfaktoren. Diese Korrekturfaktoren werden an Endgeräte 1 über den Mobilfunkkanal übermittelt. Das Satelliten-und Navigationsmodul des Endgeräts ist mit Hilfe dieser Korrekturdaten imstande, die allein aufgrund der Satellitensignale ermittelte Position zu korrigieren und die Genauigkeit der Positionsdaten um etwa den Faktor 10 zu steigern. Die mit DGPS erzielbare Genauigkeit von etwa 4 bis 10 m ermöglicht es auch unter anderem, ortsspezifische Verkehrsleitsysteme oder gezielte Wegbeschreibungen für Fußgänger mit dem Kommunikationssystem zur Verfügung zu stellen.

Informationen verschiedenster Art werden von Anbietern 5 über das TK-Netz 19 in einen Informationsserver 3 eingespeist bzw. sind über den Informationsserver 3 vom Anbieter abrufbar. Anbieter können beispielsweise Banken, Restaurants, Hotels, Stadtverwaltungen, Theater etc. sein. Die Informationen werden mit einer Ortsangabe versehen im Informationsserver 3 abgelegt. Diese Ortsangabe ist entweder direkt einer Angabe der räumlichen Koordinaten im WGS 84-System oder besteht in der Beschreibung der räumlichen Lage auf einer Landkarte oder auf einem Stadtplan, z. B. durch Angaben der Anschrift. Vorzugsweise ist der Informationsserver in der Lage, eine Koordinatenangabe der jeweiligen Lagebeschreibung zuzuordnen und umgekehrt.

Über die Mobilfunkverbindung zur Basisstation 2 und das TK-Netz 19 ist das mobile Endgerät 1 in der Lage seine momentane räumliche Position dem Informationsserver 3 zu übermitteln. Dazu wird beispielsweise vom Endgerät 1 eine Informationsnummer gewählt, worauf von der Basisstation der Verbindungsaufbau zum Informationsserver eingeleitet wird. Der Informationsserver erkennt die Positionsdaten des Endgeräts und stellt dem Nutzer des Endgeräts bestimmte ortsspezifische Daten zur Verfügung. Beispielsweise kann der Benutzer auswählen, ob er lokal, regional oder global relevante Daten abrufen möchte. Die Auswahl der gewünschten Information wird dadurch wesentlich vereinfacht, und das Kommunikationssystem paßt sich automatisch den jeweiligen lokalen Aufgabenstellungen und Bedürfnissen an.

Durch das erfindungsgemäße Kommunikationssystem eröffnen sich neben den bekannten Anwendungen für stationäre und mobile Telefone sowie für Satellitennavigation zusätzliche Nutzungsmöglichkeiten. Diese liegen beispielsweise im Bereich Orientierung, Hilfesuchen und Warnhinweise sowie Service. Einige Einsatzmöglichkeiten werden im Folgenden exemplarisch aufgeführt:

### 1. Orientierung

1.1. Routenplanung und -führung für Wanderungen aller Art im freien Gelände: Die jeweils regionale Karte (aktuellsten Stands) wird als Datensatz über das Mobilfunknetz bereitgestellt.
1.2. Fremdenführer in Städten ( z.B. mit DGPS ): Durch akustische Hinweise für z. B. Sehenswürdigkeiten, Besonderheiten, Fragen wie: In welchem Stadtteil befinde ich mich? Wo ist was? Vor welchem Gebäude stehe ich hier? Der Nutzer (z. B. Tourist) kann sich in der Stadt frei bewegen und wird permanent, aktuell und lokal informiert.
1.3. Wegeführung unter Einbeziehung des öffentlichen Verkehrs: Entscheidungshilfen auch bzgl. Zeit und Wegekosten bzw. Verkehrsüberlastungen , z.B. Stauhinweise, werden lokal angeboten.
1.4. Wegeführung mit Hilfe der Telefonnummer: In einem elektronischen Rufnummernverzeichnis oder der stationären Endeinrichtung (Endgerät, Leitung, Netzkomponente) sind auch die öffentlich nicht zugänglichen geographischen Daten enthalten. Nur der Inhaber dieses Datensatzes entscheidet, ob er einem Anrufer die Nutzung dieser Positionsangabe, ggf. nur für diesen Anruf, freigibt. Dem Anrufenden werden diese Daten nur mit Zustimmung des Positionsinhabers und ggf. auch im Klartext bekannt gegeben. Das ist für Warenlieferanten, Taxi, Besuche aller Art, Hausärzte usw. eine wertvolle Hilfe.

### 2. Hilfeersuchen und Warnhinweise

2.1. Notruf: Besondere Tastenkombinationen lösen einen Notruf mit genauer Positionsangabe und Nutzerkennung zur nächstgelegenen Meldezentrale aus (z. B.: Polizei, Feuerwehr, Rettungsleitstelle). Die automatische Positionsübermittlung erleichtert die Hilfemaßnahmen besonders im Straßenverkehr, im Gebirge, zu Wasser, für Behinderte usw. Information an den Anrufer: Bestätigung.
2.2. Warnhinweise bzgl. der aktuellen Position: Information an den Anrufer: Lawinenwarnung, Gezeiten im Wattenmeer, Wanderung im Grenzgebiet, Geisterfahrer, Sturmwarnung, Hagel, usw.
2.3. Personensuche oder Kindersicherung: Nur im gegenseitigem Einverständnis meldet sich das mobile Endgerät mit geographischer Position, festlegbar in zeitlichen Abständen und automatisch bei einem bestimmbaren Endgerät oder bei Anruf des bestimmbaren Endgerätes. Damit auch stationäre TK-Endgeräte dieses Leistungsmerkmal beinhalten können werden diese vorzugsweise mit einer grafikfähigen Darstellungsmöglichkeit ausgestattet.

### 3. Service (lokal)

3.1. Wo ist das nächste Hotel, Motel, Gaststätte? Information an den Anrufer: Vorschlag zur Wegfindung, evtl. telefonische Anmeldung,wobei die Tel./Fax-Nr. bereits im Datensatz enthalten ist, so daß automatische Wahl möglich ist.
3.2. Taxiruf zur nächsten Leitstelle: Positionsangabe und Nutzerkennung werden automatisch in einem Datensatz der Leitstelle übermittelt.
3.3. Wo ist der nächste freie, öffentl. Parkplatz? Information: Vorschlag zur Wegfindung.

Technische Nutzungseinschränkungen ergeben sich für stationäre und mobile Geräte nicht. Bei portabler Anwendung kann es durch Abschattung zu geringfügigen Beeinträchtigungen kommen. Einem Handy fehlt z. B. innerhalb eines Gebäudes der Satellitenkontakt, der jedoch durch die letzte gültige Position z. T. kompensiert werden kann und bei Nutzung eines berechtigten Endgerätes als "nicht aktuell" angezeigt wird.

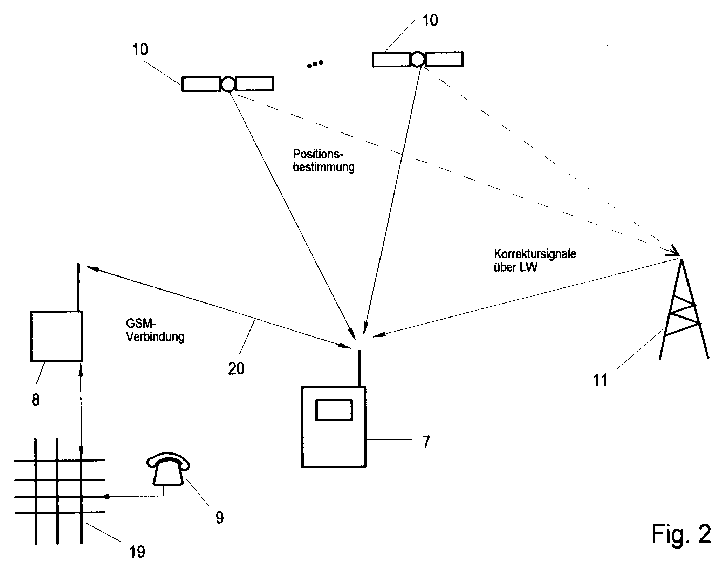

Figur 2 zeigt schematisch ein erfindungsgemäßes Endgerät im Systemverbund als Teil eines erfindungsgemäßen Kommunikationssystems. Das Endgerät 7 ist in der Lage, in gewohnter Weise eine Mobilfunkverbindung zu einer Basisstation 8 aufzubauen. Auf diese Weise können Sprache und Daten zur Basisstation 8 übertragen werden. Über die Basisstation 8 kann eine Funk- oder Festnetz-Verbindung zu weiteren Endgeräten oder auch, wie in Figur 1 dargestellt, zu einem Informationsserver hergestellt werden.

Das Endgerät 7 ist mit einem Satellitenempfangs- und Navigationsmodul ausgerüstet, mit welchem es die Signale von Navigationssatelliten 10, 10' empfangen und zur Positionsbestimmung auswerten kann.

Das in Figur 2 dargestellte Kommunikationssystem ist z.B. mit differentiellem GPS (DGPS) ausgerüstet, wodurch eine höhere Ortsauflösung als mit einfachem GPS ermöglicht wird. Dazu empfängt das Endgerät 7 mit Hilfe eines Langwellenempfängers Korrektursignale, welche von einer Referenzstation 11 über Langwelle ausgesandt werden. Im Gegensatz zur Ausgestaltung des Kommunikationssystems aus Figur 1, bei welchem vorzugsweise jede der Basisstationen des zellularen Mobilfunknetzes als Referenzstation dient und mit einem Satellitenmodul sowie einem Prozessor ausgerüstet ist, ist bei der Ausgestaltung des Kommunikationssystems gemäß Figur 2 die Referenzstation 11 funktionell von der Mobilfunkbasisstation 8 getrennt. Diese Referenzstation 11 erzeugt Korrektursignale in bereits dargestellter Weise und sendet diese im Langwellenbereich aus. Durch die Verwendung von Langwellen kann durch eine Referenzstation ein wesentlich größerer Bereich mit einem Radius von etwa 600 km ausgeleuchtet und mit Korrekturdaten versorgt werden, als dies durch die Verwendung von Mobilfunkbasisstationen und die Aussendung der Korrekturdaten über einen Mobilfunkkanal möglich ist. Für die Bundesrepublik ist beispielsweise eine einzige derartige Referenzstation 11 ausreichend.

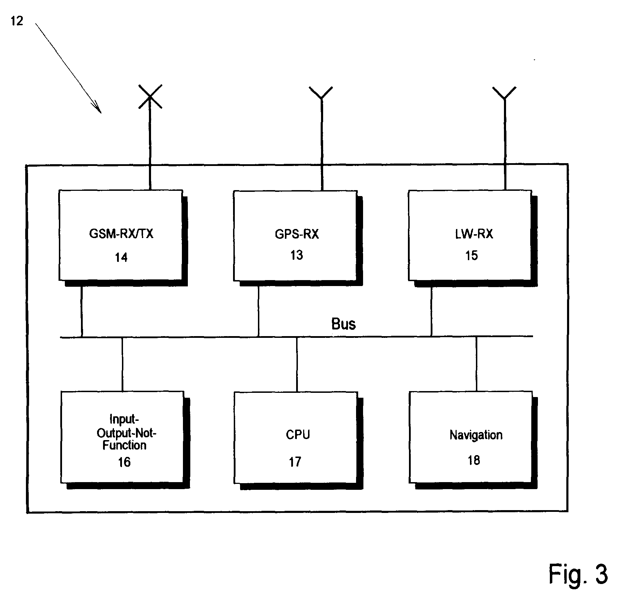

Figur 3 zeigt das Blockschaltbild eines erfindungsgemäßen mobilen Endgeräts. Das Endgerät 12 weist die bekannten Komponenten eines Mobiltelefons 14 und 16 auf. Die Sende- und Empfangseinheit 14 dient zum Senden und Empfangen von Signalen über einen Mobilfunkkanal zur Basisstation. Die Ein- und Ausgabeeinheit 16 umfaßt Mikrofon und Lautsprecher zur Umwandlung von elektrischen Signalen in akustische und umgekehrt, sowie die Tastatur und vorzugsweise ein grafikfahiges Display. Die Interaktion der jeweiligen Elemente wird durch einen Prozessor 17 gesteuert. Erfindungsgemäß ist in das Endgerät 12 ein Satellitenempfangsmodul 13 integriert. Das Modul 13 empfängt die Signale der Navigationssatelliten und stellt sie zur Auswertung und Bestimmung der momentanen Position des Endgeräts zur Verfügung.

Um eine hochauflösende Ortsbestimmung zu ermöglichen, weist das Endgerät 12 weiterhin einen Funkempfänger 15 auf, welcher z.B. über Langwelle gesendete Korrekturdaten zu empfangen imstande ist.

Diese Daten werden zur gemeinsamen Auswertung mit den vom Navigationsmodul 18 empfangenen Satellitendaten zur Verfügung gestellt.

Die einzelnen Komponenten des mobilen Endgeräts 12 sind durch einen gemeinsamen Datenbus miteinander verbunden. Die gemeinsame Auswertung aller Daten erfolgt im Prozessor 17 mit Navigationsmodul 18, z.B. die Kombination der GPS-Daten mit den DGPS-Korrekturdaten zu einem hochgenauen Positionssignal. Der Prozessor 17 wertet die Informationen von allen Einheiten aus und gibt sie aufbereitet an eine Benutzeroberfläche. Weiterhin wandelt der Prozessor 17 auch die über den Mobilfunkkanal von der Sende- und Empfangseinheit empfangenen Daten aus dem Informationsserver derart um, daß sie von der Ein- und Ausgabeeinheit akustisch oder auf einem Display ausgegeben werden können.

### Liste der Bezugszeichen:

- 1,7,12: mobiles Endgerät
- 2,8: Mobilfunk-Basisstation
- 3: Informationsserver
- 4,10,10': Satellit
- 5: Informationsanbieter
- 6,11: Referenzstation
- 9: stationäres Endgerät
- 13: Satellitenempfänger (GPS-Modul)
- 14: GSM Sende-/Empfangseinheit
- 15: Langwellen-Empfänger
- 16: Ein-/Ausgabeeinheit
- 17: Prozessor (CPU)
- 18: Navigationsmodul
- 19: terrestrisches Kommunikationsnetz
- 20: Mobilfunkverbindung

## Patentansprüche

1. Digitales Kommunikationssystem, bei welchem Daten zwischen mobilen und/oder stationären Endgeräten (1,7,12) wenigstens teilweise über ein Mobilfunksystem und/oder ein terrestrisches Kommunikationsnetz übertragen und am Endgerät (9) in akustischer und/oder optischer Form umgesetzt werden, dadurch gekennzeichnet,
daß in mobile Endgeräte (1,7,12) jeweils ein Satellitenempfänger (13) integriert ist, welcher die momentane geographische Position des Endgeräts (1,7,12) durch Auswertung von Satellitensignalen zu ermitteln imstande ist,
daß in stationären Endgeräten (9) eine geographische Positionsangabe hinterlegt ist und daß vom Endgerät (1,7,9,12) unter Übermittlung der Positionsdaten ortsspezifische Informationen von wenigsten einem Informationsserver (3) anforderbar und am Endgerät (1,7,9,12) ausgebbar sind,
wobei der Informationsserver (3) automatisch eine Auswahl von ortsspezifisch relevanten Informationen zur Abfrage bereitzustellen imstande ist, oder daß die geographischen Positionen unter Umgehung des Servers (3) direkt zwischen zwei Endgeräten austauschbar sind.

2. Kommunikationssystem nach Anspruch 1, dadurch gekennzeichnet,
daß die geographische Position des mobilen Endgeräts (1,7,12) durch ein Satellitenempfangsmodul (13) in Verbindung mit einem Navigationsmodul (18) ermittelt wird, insbesondere mittels GPS-Verfahren.

3. Kommunikationssystem nach Anspruch 1 oder 2, dadurch gekennzeichnet,
daß zur Erhöhung der Ortsauflösung mittels differentieller Verfahren der Satellitennavigation, insbesondere DGPS, wenigstens eine Referenzstation (6, 11) vorgesehen ist, welche Korrekturdaten zu ermitteln und an ein mobiles Endgerät (1,7,12) bzw. dessen Navigationsmodul (18) zu übertragen imstande ist, wobei das Endgerät die Korrekturdaten zu empfangen und auszuwerten imstande ist.

4. Kommunikationssystem nach Anspruch 3, dadurch gekennzeichnet,
daß wenigstens eine Mobilfunkbasisstation (2) mit einem Satellitenempfangsmodul und einem Prozessor zur Berechnung von Korrekturdaten ausgestattet ist und als Referenzstation (6) dient, wobei die Korrekturdaten dem Navigationsmodul (18) in mobilen Endgeräten (1, 12) über das Mobilfunksystem übermittelt werden.

5. Kommunikationssystem nach Anspruch 3 , dadurch gekennzeichnet,
daß die Referenzstation (11) die Korrekturdaten über einen Funksender großer Reichweite, insbesondere im Langwellenbereich, sendet und in das Endgerät (7,12) ein Funkempfänger (15) zum Empfang der Korrekturdaten integriert ist.

6. Kommunikationssystem nach einem der vorangegangenen Ansprüche, dadurch gekennzeichnet,
daß die Weitergabe oder Übermittlung der geographischen Endgeräteposition nur mit Zustimmung des Positionsinhabers erfolgen kann.

7. Kommunikationssystem nach Anspruch 6, dadurch gekennzeichnet,
daß das mobile Endgerät (1,7,12) in festlegbaren Zeitabständen einem bestimmten Endgerät die geographische Position automatisch mitteilt oder bei Anruf von diesem bestimmten Endgerät eine automatische geographische Positionsangabe erfolgt.

8. Kommunikationssystem nach Anspruch 6, dadurch gekennzeichnet,
daß die geographischen Endgeräteposition nur in verschlüsselter Form übermittelt wird und die Entschlüsselung zur Klartextdarstellung nur vom Positionsinhaber freigegeben werden kann.

9. Kommunikationssystem nach Anspruch 6, dadurch gekennzeichnet,
daß die zu übermittelnde geographischen Endgeräteposition nur dann direkt in das Navigationsmodul (18) eingelesen wird und/oder direkt zur Anzeige kommt, wenn es vom Kommunikationspartner dazu freigegeben worden ist.

10. Kommunikationssystem nach einem der vorangegangenen Ansprüche dadurch gekennzeichnet,
daß abgerufene geographische Positionsangaben des mobilen Kommunikationspartners, die nicht mehr der aktuellen Zeit entsprechen, als solche gekennzeichnet zur Anzeige kommen.

11. Kommunikationssystem nach einem der vorangegangenen Ansprüche, dadurch gekennzeichnet,
daß im Informationsserver (3) Informationen zusammen mit der Angabe des entsprechenden Ortes gespeichert sind und der Informationsserver anforderungsgemäß die Zuordnung der vom Endgerät (1,7,9,12) übermittelten Positionsdaten zu lokalen, regionalen und/oder globalen gespeicherten Informationen zu treffen und diese dem Endgerät zu übermitteln imstande ist.

12. Kommunikationssystem nach Anspruch 11, dadurch gekennzeichnet,
daß bei der Inbetriebnahme eines Endgerätes (1,7,9,12) ortsbezogene Warnhinweise vom Server (3) übermittelt werden und vorrangig optisch und/oder akustisch angezeigt werden.

13. Kommunikationssystem nach Anspruch 11, dadurch gekennzeichnet,
daß das Endgerät (1,7,9,12) eine Notruffunktion zu einem regionalen Hilfeleister enthält und dabei die geographische Endgeräteposition übermittelt wird.

14. Kommunikationssystem nach Anspruch 11, dadurch gekennzeichnet,
daß im Endgerät (1,7,9,12) und in Verbindung mit dem Server (3) die günstigste Wegstrecke bezüglich des Fortbewegungsmittels zum Kommunikationspartner ermittelt und zur Anzeige gebracht wird.

15. Kommunikationssystem nach Anspruch 11, dadurch gekennzeichnet,
daß das Endgerät (1,7,12) in Verbindung mit dem Server (3) auf das unmittelbare Umfeld bezogene Informationen optisch und/oder akustisch zur Anzeige bringt.

16. Mobiles Endgerät (1,7,12) für ein System für digitalen Mobilfunk, dadurch gekennzeichnet,
daß in das Endgerät (1,7,12) ein Satellitenempfänger (13) integriert ist, welcher von Satelliten (4,10) ausgesandte Signale zu empfangen und daraus mittels eines Navigationsmoduls (18) die momentane räumliche Position des Endgerätes zu ermitteln imstande ist, daß das Endgerät unter Übermittlung der Positionsdaten ortsspezifische Informationen von wenigstens einem Informationsserver (3) anzufordern und dem Benutzer auszugeben imstande ist, wobei die Datenübertragung über eine Mobilfunkbasisstation (2,8) erfolgt, und daß das Endgerät (1,7,12) mit anderen mobilen oder stationären Endgeräten geographische Positionsdaten auszutauschen in der Lage ist.

17. Mobiles Endgerät (1,7,12) nach Anspruch 16, dadurch gekennzeichnet,
daß der Satellitenempfänger ein systemspezifisches Satellitenempfangsmodul, insbesondere ein GPS-Modul, beinhaltet.

18. Mobiles Endgerät (1,7,12) nach Anspruch 16 oder 17, dadurch gekennzeichnet,
daß zur Positionsoptimierung Korrekturdaten, insbesondere DGPS-Korrekturdaten, empfangen und ausgewertet werden können.

19. Mobiles Endgerät (1,7,12) nach Anspruch 18, dadurch gekennzeichnet,
daß es mindestens einen Funkempfänger (15) zum Empfang von in Langwellenbereichen gesendeten Korrekturdaten aufweist.

20. Endgerät (1,7,12) nach einem der Ansprüche 16 bis 19, dadurch gekennzeichnet,
daß der Satellitenempfänger (13), die Ein- und Ausgabeeinheit (16), die Mobilfunk-Sende-und Empfangseinheit (14), das Navigationsmodul (18) und ggf. der Funkempfänger (15) durch einen gemeinsamen Datenbus miteinander verbunden sind, wobei die Auswertung aller Daten in einem in das Endgerät (1,7,12) integrierten Prozessor (17) erfolgt und die Daten aufbereitet an einer Benutzeroberfläche ausgegeben werden.

21. Stationäres Endgerät (9) dadurch gekennzeichnet,
daß es neben den bekannten TK-Funktionen auch Informationen über die geographische Lage des Kommunikationspartners zu verarbeiten und darzustellen in der Lage ist.

22. Endgerät (1,7,9,12) nach einem der Ansprüche 16 bis 21, dadurch gekennzeichnet,
daß ankommende Verbindungssuchen zum Zweck der automatischen Positionsmitteilung eines mobilen Endgerätes angenommen werden und der Nachrichteninhalt gespeichert wird.

23. Endgerät (1,7,12) nach einem der Ansprüche 16 bis 22, dadurch gekennzeichnet,
daß die Freigabe zur Übermittlung der geographischen Position durch eine entsprechende Funktionseinheit erfolgt.

24. Endgerät (1,7,9,12) nach einem der Ansprüche 16 bis 23, dadurch gekennzeichnet,
daß ein Notrufauslösemechanismus vorhanden ist.

25. Endgerät (1,7,9,12) nach einem der Ansprüche 16 bis 24, dadurch gekennzeichnet,
daß an der Schnittstelle Maschine/Mensch Daten und Informationen auf einem grafikfähigen Display dargestellt werden.
